# EUROPEAN PATENT APPLICATION

(11) **EP 4 243 230 A1**
(43) Date of publication of application: **13.09.2023**
(21) Application number: 23160575.9
(22) Date of filing: 07.03.2023
(51) Int. Cl.: H02G 15/113, G02B 6/44, H02G 1/14, H02G 15/00, B60R 16/02, H01R 4/28, H01R 4/30, H01R 4/70, H01R 13/504, H01R 13/506, H01R 13/631, G03B 17/08, H01R 12/59, H01R 12/61, H01R 13/52, H01R 12/63

(54) **WATERTIGHT WIRING BETWEEN CABLE AND FFC**

(30) Priority: 07.03.2022 IT 202200004274
(71) Applicant: Elettrosud Srl, 80054 Gragnano (NA) (IT)
(72) Inventor: RUSSO, Daniele, 80054 Gragnano (NA) (IT); BUONO, Ciro, 80054 Gragnano (NA) (IT)
(74) Representative: Fezzardi, Antonio

(57) **Abstract**

A wiring system between a voltage cable (4) and a flexible flat cable (FFC) (3) comprising:
• An upper half-shell (1);
• A lower half-shell (2);
• A flexible flat cable (FFC) (3);
• A voltage cable (4);
• An O-Ring (5);
• A filling sealing material (6) being injectable and adapted to harden.

## Description

The present invention relates to the sector of wiring and, in particular, an innovative wiring system between a generic voltage cable and a flexible flat cable (FFC) which is able to guarantee total watertightness against infiltrations.

The invention can be used, specifically, in wiring systems of windshields in the automotive sector, e.g., for supplying resistors for heating/demisting windshields, for wiring aerials integrated into the windshield and in general in laminated glass.

The coupling between a voltage cable and an FFC for the passage of current inside an electrical resistor is known.

However, these couplings are never perfectly watertight, and this can imply the entry of moisture with consequent oxidation of contacts and subsequent degradation thereof, or there may be electrical connection isolation issues. In some cases, the entry of water into the coupling and capillary rising or descent into the copper conductor of the cable can cause oxidation, short circuits or electrical isolation issues, also inside the conductor placed on the opposite end to the FFC.

In fact, also in known solutions which provide for covering the contact area with shells or covers, overmolds with plastic injection or hotmelt material, it is not possible to guarantee the watertightness of the casing.

The object of the invention is to overcome the limits of the prior art by forming wiring that enables the coupling between a cable and a flexible flat cable (FFC) and which enables perfect watertightness to be obtained in the wiring junction area.

The proposed solution consists of a wiring system in which the connection area between the cable and the FFC (which takes place by soldering, resistance welding or other technologies) is completely coated with a sealing material which perfectly adheres both to the FFC, directly, and to the cable, by a proper O-Ring.

A better understanding of the invention will be obtained from the following detailed description and with reference to the accompanying figures showing, by way of a non-limiting example, a preferred embodiment.

In the drawings:

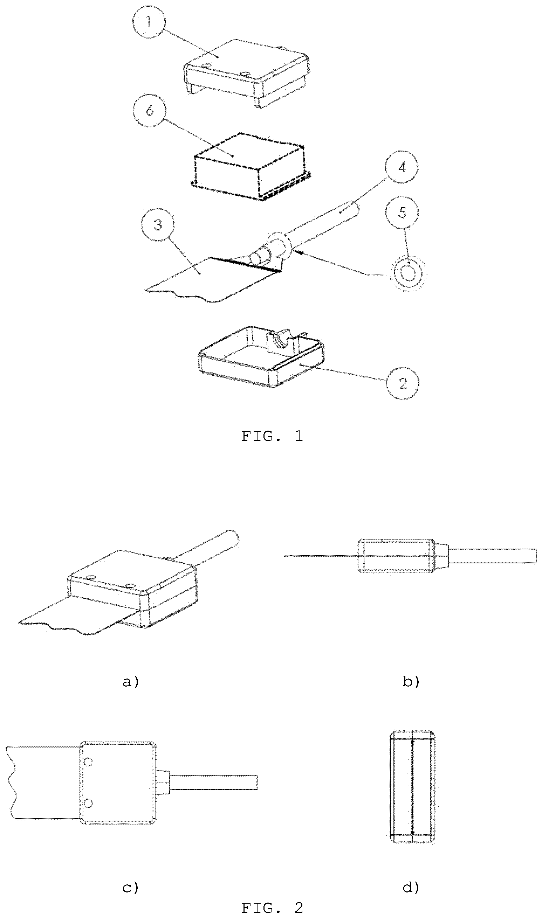

Figure 1 is an exploded view of the connection system according to the invention.
Figures 2a, 2b, 2c and 2d are isometric, side, top and front views, respectively, of the connection system according to the invention.

According to the invention, the wiring system comprises the following elements:
- An upper half-shell (1);
- A lower half-shell (2);
- A flexible flat cable (FFC) (3);
- A voltage cable (4);
- An O-Ring (5);
- A sealing material (6).

The upper (1) and lower (2) half-shells are joined to define within them a confined volume adapted to be filled with sealing material (6): in the preferred embodiment described herein, said half-shells have on one side a flat output adapted to the FFC cable (3), whereas on the opposite side they each have a semi-cylindrical output suitable to accommodate the voltage cable (4). Between said two opposing outputs, the half-shells (1, 2) define a closed cavity adapted to accommodate the connection area between the FFC (3) and the voltage cable (4).

The upper half-shell (1) also has two holes whose function is to enable: in the first, the introduction of the sealing material (6) in liquid or paste form, and in the second, enable the exit of air, so as to prevent incomplete filling of the internal volume with the sealant (6).

The semi-cylindrical part of each shell has a semi-toroidal shaped groove suitable to accommodate the O-Ring (5) and to clamp it in a watertight way around the voltage cable (4).

Essentially, the coupling system according to the invention provides first for electrically connecting the FFC cable (3) with the voltage cable (4), e.g. by tin brazing, resistance welding, ultrasonic welding, etc., in which said voltage cable (4) is provided with an O-Ring (5); the assembly thus composed is accommodated inside the shell comprising the lower half-shell (2) which is joined to the upper half-shell (1), after the cable assembly (3, 4) has been assembled and the O-Ring (5) positioned in its proper housing seat. The joining of said half-shells (1, 2) can take place by pressure or snap closure, or by heat sealing, ultrasonic welding or gluing.

The system thus constituted, is filled with a sealing material (6) adapted to solidify and then, after solidification, it assumes the joined shape of the compartment of the shell defined by joining the two half-shells (1, 2).

In the preferred embodiment described herein up to now, the sealing material (6) consists of a resin (preferably, but not exclusively, epoxy) and both the half-shells, the upper (1) and lower (2) ones, are made of plastic material, preferably but not limited to, polyamide 66 (PA66).

According to the invention, the FCC (3) is selectable from all the known types, whether they are made of polyester or polyimide as an insulator. For example, the FCC may be a thin sheet of tin plated copper covered with an insulator made of polyimide (a material whose most common trade name on the market is "Kapton").

Further, also the cable (4) is selectable from known types, said cables being provided with an insulating coating which may be cross-linked polyethylene (XLPE), polyvinyl chloride (PCV), polypropylene (PP), fluorinated ethylene propylene (FEP), ethylene tetrafluoroethylene (ETFE), silicone, rubber, thermoplastic rubbers or the like.

The O-Ring (5) is preferably made of rubber.

Advantageously, the epoxy resin which constitutes the sealing material (6) has excellent adhesion to the polyimide which enables water infiltrations on the FFC/sealant side to be prevented.

The presence of the O-Ring (5) has a dual function: preventing the exit of resin on the cable side during the injection process thereof into the cavity, but above all preventing water infiltrations on the cable/sealant side. In fact, epoxy resin would not have good adhesion to the cable (4) as the outer coating material of the latter is usually a cross-linked polyethylene which has difficult adhesion with resins in general.

Therefore, the system according to the invention enables a good connection to be obtained between an FCC (3) and an electric cable (4) which is totally watertight, thus preventing degradation of the contacts due to water infiltrations.

## Claims

1. A wiring system between a voltage cable (4) and a flexible flat cable (FFC) (3) comprising:
• An upper half-shell (1);
• A lower half-shell (2);
• A flexible flat cable (FFC) (3);
• A voltage cable (4);
• An O-Ring (5);
• A filling sealing material (6) being injectable and adapted to harden.

2. A wiring system according to the preceding claim, **characterized in that** there is a hole on the upper half-shell (1) for the introduction of the sealing material (6) in liquid/semi-liquid form, for filling an inner compartment defined by the coupling between said upper half-shell (1) and the lower half-shell (2), and in which there are the FFC cable (3) electrically coupled to the voltage cable (4) by means of a connector.

3. A wiring system according to claim 1 or 2, **characterized in that** the O-Ring (5) is inserted around said voltage cable (4) and is pressed around the cable itself by specific semi-circular seats provided on the two half-shells (1, 2).

4. A wiring system according to the preceding claim, **characterized in that** said coupling between the upper half-shell (1) and the lower half-shell (2) is achieved by means of a pressure closure, a snap closure, ultrasonic welding or gluing.

5. A wiring system according to one or more of the preceding claims, **characterized in that** the presence of the O-Ring (5) allows both preventing water infiltrations on the cable/sealing side and ensuring the continuity of protection against moisture on the O-Ring (5)/filling material (6) side.

6. A wiring system according to one or more of the preceding claims, **characterized in that** the filling sealing material (6) is an epoxy resin.

7. A wiring system according to one or more of the preceding claims, **characterized in that** said FFC (3) is preferably of the type with polyimide as a coating.

8. A wiring system according to one or more of the preceding claims, **characterized in that** said voltage cable (4) is provided with an insulating coating which can be cross-linked polyethylene (XLPE), polyvinyl chloride (PCV), polypropylene (PP), fluorinated ethylene propylene (FEP), ethylene tetrafluoroethylene (ETFE), silicone, rubber, thermoplastic rubbers or the like.
